(19) Europäisches Patentamt
European Patent Office
Office européen des brevets

(11) **EP 3 824 007 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **19737128.9**

(22) Anmeldetag: **12.07.2019**

(51) Internationale Patentklassifikation (IPC):
**C08G 18/42** (2006.01)       **B29C 64/118** (2017.01)
**C08G 18/66** (2006.01)       **C08G 18/72** (2006.01)
**C08G 18/73** (2006.01)       **C08G 18/75** (2006.01)
**C08G 18/32** (2006.01)       **C09J 175/06** (2006.01)
**B33Y 70/00** (2020.01)

(52) Gemeinsame Patentklassifikation (CPC):
**C09J 175/06; C08G 18/3206; C08G 18/4238;
C08G 18/664; C08G 18/722; C08G 18/73;
C08G 18/755;** B33Y 70/00; C08G 2170/20

(86) Internationale Anmeldenummer:
**PCT/EP2019/068778**

(87) Internationale Veröffentlichungsnummer:
**WO 2020/016114 (23.01.2020 Gazette 2020/04)**

(54) **VERFAHREN ZUM APPLIZIEREN EINES EIN SCHMELZBARES POLYMER ENTHALTENDEN MATERIALS MIT FREIEN NCO-GRUPPEN**

METHOD FOR APPLYING A MATERIAL WITH FREE NCO GROUPS CONTAINING A FUSIBLE POLYMER

PROCÉDÉ D'APPLICATION D'UN MATÉRIAU CONTENANT UN POLYMÈRE FUSIBLE AVEC DES GROUPES NCO LIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2018   EP 18183687**

(43) Veröffentlichungstag der Anmeldung:
**26.05.2021   Patentblatt 2021/21**

(73) Patentinhaber: **Covestro Intellectual Property GmbH & Co. KG**
**51373 Leverkusen (DE)**

(72) Erfinder:
• **ACHTEN, Dirk**
**51375 Leverkusen (DE)**
• **BÜSGEN, Thomas**
**51377 Leverkusen (DE)**
• **TILLACK, Jörg**
**42699 Solingen (DE)**
• **ROTT, Ralf**
**51381 Leverkusen (DE)**

• **DEGIORGIO, Nicolas**
**47807 Krefeld (DE)**
• **KÜNZEL, Jonas**
**51381 Leverkusen (DE)**
• **BÜCHNER, Jörg**
**51467 Bergisch Gladbach (DE)**
• **ARNDT, Wolfgang**
**41542 Dormagen (DE)**
• **MELCHIORS, Martin**
**42799 Leichlingen (DE)**
• **KRAUS, Harald**
**51371 Leverkusen (DE)**
• **SCHUSTER, Fabian**
**51373 Leverkusen (DE)**

(74) Vertreter: **Levpat**
**c/o Covestro AG**
**Gebäude 4825**
**51365 Leverkusen (DE)**

(56) Entgegenhaltungen:
WO-A1-2012/041719       WO-A1-2016/061060
WO-A1-2018/046726       US-A1- 2018 122 570

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Applizieren eines ein schmelzbares Polymer enthaltenden Materials, umfassend den Schritt des Auftragens eines Filaments des zumindest teilweise geschmolzenen ein schmelzbares Polymer enthaltenden Materials aus einer Austragsöffnung eines Austragselementes heraus auf ein erstes Substrat.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) oder Schmelzschichtungsverfahren beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ein frühes Patentdokument für diese Technologie ist US 5,121,329. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Das thermoplastische Polyurethan gemäß WO 2015/197515 A1 weist einen Schmelzbereich (DSC, Differential Scanning Calorimetry; zweite Aufheizung mit Aufheizrate 5K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 cm$^3$/10 min und eine Änderung des MVR bei einer Erhöhung dieser Temperatur T um 20 °C von kleiner 90 cm$^3$/10 min auf. Der Einsatzzweck ist die Herstellung von Gegenständen in pulverbasierten additiven Fertigungsverfahren.

WO 2016/198425 A1 offenbart eine thermisch leitfähige Schmelzklebstoff-Zusammensetzung umfassend a) wenigstens einen thermisch leitfähigen Füllstoff, wobei der thermisch leitfähige Füllstoff eine Mischung aus plättchenförmigen und ersten kugelförmigen Partikeln enthält in einem Verhältnis von 10:1 und wobei die plättchenförmigen Partikel ein Seitenverhältnis von 1.27 zu 7 aufweisen. Alternativ enthält der thermisch leitfähige Füllstoff eine Mischung von zweiten kugelförmigen Partikeln mit einer durchschnittlichen Partikelgröße von 35 bis 55 μm und dritten kugelförmigen Partikeln mit einer durchschnittlichen Partikelgröße von 2 bis 15 μm in einem Verhältnis von 10:1. Der thermisch leitfähige Füllstoff ist ausgewählt aus der Gruppe bestehend aus Zinnoxid, Indiumoxid, Antimonoxid, Aluminiumoxid, Titanoxid, Eisenoxid, Magnesiumoxid, Zinkoxid, Seltenerd-Oxide, Alkali und Erdalkalisufate, Kreide, Bornitrid, Alkalisilikat, Siliziumoxid, Eisen, Kupfer, Aluminium, Zink, Gold, Silber, Zinn, Alkali und Erdalkalihalogenide, Alkali und Erdalkaliphosphate und deren Mischungen. Weiterhin enthält die Zusammensetzung b) wenigstens ein (Co)Polymer aus der Gruppe bestehend aus Polyamid, thermoplastische Polyamide, Copolyamide, Butylkautschuk, Polybutylen, Poly(meth)acrylate, Polystyrol, Polyurethane, thermoplastisches Polyurethan, Polyester, Ethylencopolymere, Ethylen-vinyl-copolymere, SB-Kautschuk, SEBS-Kautschuk, SI-Kautschuk, SIS-Kautschuk, SBS-Kautschuk, SIB-Kautschuk, SIBS-Kautschuk, Polylactid, Silikone, Epoxyharze, Polyole und deren Mischungen. Gemäß einem Verwendungsanspruch soll das Material auch als Filament für das 3D-Drucken eingesetzt werden können.

DE 10 2012 020000 A1 betrifft ein mehrstufiges 3D-Druckverfahren sowie eine für dieses Verfahren verwendbare Vorrichtung. Diese Patentanmeldung führt aus, dass nach dem Auspacken - auch als Entpacken bezeichneten Verfahrensschritt, die Formteile dem Endverfestigungsschritt zugeführt werden. Anschließend werden die Formteile weiteren Folgeprozessen zugeführt. Dieser Verfahrensschritt wird vorzugsweise als Wärmebehandlungsschritt ausgeführt. Als Beispiel können hier Teile aus Croning-Sand dienen, die nach dem Prozess hergestellt wurden. Nach dem Entpacken werden diese vorzugsweise wieder in ein weiteres Partikelmaterial eingebettet. Dieses weist jedoch keinerlei Binder-Umhüllung auf und ist vorzugsweise thermisch gut leitfähig. Im Anschluss werden die Teile in einem Ofen oberhalb der Schmelztemperatur des Binders wärmebehandelt. Das spezielle Phenolharz der Umhüllung in einer der bevorzugten Ausführungsformen wird dabei vernetzt und die Festigkeit steigt stark an. Allgemein sind für diesen Verfahrensschritt der Endverfestigung Schmelzklebstoffe bevorzugt. Als Basispolymere können vorzugsweise verwendet werden: PA (Polyamide), PE (Polyethylen), APAO (amorphe Polyalphaolefine), EVAC (Ethylenvinylacetat-Copolymere), TPE-E (Polyester-Elastomere), TPE-U (Polyurethan-Elastomere), TPE-A (Copolyamid-Elastomere) und Vinylpyrrolidon/VinylacetatCopolymere. Weitere übliche und dem Fachmann bekannte Zusatzstoffe wie Nukleierungsmittel können zugegeben werden.

Reaktive Hotmelt-Klebstoffe wurden im Stand der Technik bereits beschrieben. EP 1 036 103 B1 betrifft zum Beispiel eine lösemittelfreie feuchtigkeitshärtende Polyurethan-Schmelzkleberzusammensetzung, die bei Raumtemperatur fest ist und das Produkt der Kombination folgender Bestandteile umfasst:

a) 95-3 Gew.-% des Reaktionsprodukts eines ersten Polyisocyanats und eines Polymers aus ethylenisch ungesättigten Monomeren mit einem Molekulargewicht unter 60000, wobei dieses Polymer aktive Wasserstoffgruppen aufweist; und kein Copolymer von Ethylen, Vinylacetat und einem ethylenisch ungesättigten Monomer mit mindestens einer primären Hydroxylgruppe ist;

b) 5-90 Gew.-% mindestens eines Polyurethan-Präpolymers mit freien Isocyanatgruppen, hergestellt aus mindestens einem Polyol aus der Gruppe der Polyesterdiole, Polyestertriole, Polyesterpolyole, aromatischen Polyole und deren Gemische sowie mindestens einem zweiten Polyisocyanat, das mit dem ersten Polyisocyanat identisch oder von diesem verschieden sein kann; und

c) 0-40 Gew.-% mindestens eines Additivs aus der Gruppe der Katalysatoren, Klebrigmacher, Weichmacher, Füller, Pigmente, Stabilisatoren, Haftverbesserer, Rheologieverbesserer und Mischungen derselben, und zwar dergestalt, dass die Summe aus a), b) und c) insgesamt 100 Gew.-% ergibt.

EP 1 231 232 B1 offenbart ein selbsttragendes reaktives Schmelzklebeelement, das einen bei Raumtemperatur festen, reaktiven Einkomponenten-Schmelzklebstoff umfasst, der mindestens ein bei Raumtemperatur festes oder flüssiges Isocyanat und mindestens ein bei Raumtemperatur festes isocyanatreaktives Polymer und/oder Harz umfasst. Gemäß einer Ausführungsform wird als Isocyanat ein maskiertes oder blockiertes Isocyanat verwendet, welches insbesondere unter Wärme- und/oder Feuchtigkeitseinwirkung die blockierenden oder maskierenden Gruppen abspaltet. Das in EP 1 232 232 B1 beschriebene Verfahren beschreibt keine Anwendung bei Temperaturen > 160 °C. Es handelt sich in den Beispielen im Wesentlichen um nicht destillierte isocyanatfunktionelle niedermolekulare Prepolymere mit einem Überschuss an Monomeren oder Dimeren Isocyanaten. Aufgrund der Herstellungsmethode mit einem deutlichen Überschuss an Isocyanatfunktionalität werden keine linearen hochmolekularen Polymere gebildet.

WO 2018/046726 A1 betrifft ein Verfahren zur Herstellung eines Gegenstandes, umfassend die Schritte:

I) Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;

II) Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

III) Wiederholen des Schritts II), bis der Gegenstand gebildet ist;

wobei wenigstens die Schritte II) und III) innerhalb einer Kammer durchgeführt werden und das Aufbaumaterial ein schmelzbares Polymer aufweist. Das schmelzbare Polymer weist einen Schmelzbereich (DSC, differential scanning calorimetry; 2. Aufheizung mit Aufheizrate 5 K/min.) von > 20 °C bis < 100 °C und einen Betrag der komplexen Viskosität $|\eta^*|$ (bestimmt durch Viskosimetriemessung in der Schmelze mit einem Platte/Platte-Oszillationsscherviskosimeter bei 100 °C und einer Scherrate von 1/s) von > 10 Pas bis < 1000000 Pas auf und die Temperatur beträgt innerhalb der Kammer < 50 °C.

Die vorliegende Erfindung hat sich die Aufgabe gestellt, die Nachteile im Stand der Technik zumindest teilweise zu beheben. Insbesondere hat sie sich die Aufgabe gestellt, ein neuartiges Verarbeitungsverfahren für (latent) reaktive Hotmelt-Klebstoffe anzugeben.

Gelöst wird diese Aufgabe durch ein Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß vorgeschlagen wird ein Verfahren zum Applizieren eines ein schmelzbares Polymer enthaltenden Materials, umfassend den Schritt:

- Auftragen eines Filaments des zumindest teilweise geschmolzenen ein schmelzbares Polymer enthaltenden Materials aus einer Austragsöffnung eines Austragselementes heraus auf ein erstes Substrat;

wobei das schmelzbare Polymer die folgenden Eigenschaften aufweist:

- einen Schmelzpunkt (DSC, differential scanning calorimetry; 2. Aufheizung mit Aufheizrate 5 °C/min.) in einem Bereich von ≥ 35 °C bis ≤ 150 °C (vorzugsweise ≥ 40 °C bis ≤ 130 °C, mehr bevorzugt ≥ 45 °C bis ≤ 120 °C);

- eine Glasübergangstemperatur (DMA, dynamisch-mechanische Analyse gemäß DIN EN ISO 6721-1:2011) in einem Bereich von ≥ -70 °C bis ≤ 110 °C (vorzugsweise ≥ -50 °C bis ≤ 50 °C, mehr bevorzugt ≥ -48 °C bis ≤ 20 °C);

wobei das Filament während des Applikationsprozesses für ≤ 20 Minuten (vorzugsweise ≥ 1 Sekunde bis ≤ 10 Minuten, mehr bevorzugt ≥ 1 Sekunde bis ≤ 5 Minuten, weiter bevorzugt ≥ 1 Sekunde bis ≤ 2 Minuten, besonders bevorzugt ≥ 1 Sekunde bis ≤ 30 Sekunden) eine Applikationstemperatur von ≥ 100 °C (bevorzugt ≥ 120°C, besonders bevorzugt ≥ 180°C und ganz bevorzugt ≥ 200°C) oberhalb des Schmelzpunktes des schmelzbaren Polymers aufweist und

wobei in dem das schmelzbare Polymer aufweisenden Material weiterhin freie NCO-Gruppen vorliegen.

Das erste Substrat, auf das das Filament aufgetragen wird, kann eine ebene oder gekrümmte Fläche sein oder aber auch die zuletzt aufgetragene Lage im Rahmen eines 3D-Druckverfahrens sein.

Das schmelzbare Polymer, welches in der Regel ein teilkristallines Polymer ist, lässt sich, ohne sich darauf beschränken zu wollen, als Hotmelt- oder Schmelzklebstoff bezeichnen. Es wurde überraschend gefunden, dass sich solche Hotmelts bei Temperaturen weit über ihrer Schmelztemperatur und sogar ihrer Zersetzungstemperatur kurzzeitig verarbeiten lassen, ohne dass signifikante Einbußen ihrer gewünschten Eigenschaften auftreten. Unter der Zersetzungstemperatur wird hierbei eine Temperatur verstanden, bei der ein polymeres Material innerhalb eines Zeitraums von ≤ 1 Stunde seinen Speichermodul G' (DMA, dynamisch-mechanische Analyse gemäß DIN EN ISO 6721-1:2011 bei einer Frequenz von 1/s) mehr als verdoppelt oder aber der Speichermodul G' auf einen Wert von weniger als die Hälfte des Ausgangswertes sinkt.

Vorzugsweise ist die Austragsöffnung eines Austragselementes eine Düse.

Besonders geeignet für das Applizieren des ein schmelzbares Polymer enthaltenden Materials haben sich Druckköpfe erwiesen, die nach dem Prinzip eines FDM-3D-Druckers funktionieren. Dabei wird üblicherweise ein vorextrudierter Strang eines thermoplastischen Materials (festes Filament) durch eine kurze Heizzone gefördert, um am Ende der Heizzone durch eine Düse mit einer geringeren Querschnittsfläche als der Querschnittsfläche des geförderten festen Filaments extrudiert zu werden. Der Druckkopf kann während der Extrusion in XYZ-Richtung frei im Raum bewegt werden, üblicherweise aber in einem konstanten Abstand oberhalb einer Substratfläche, wobei der Abstand zur Substratfläche gewöhnlich geringer ist als der mittlere Düsendurchmesser, so dass das Extrudate beim Ablegen auf das Substrat unter Druck verformt wird. Die Verfahrgeschwindigkeit des Druckkopfes ist dabei üblicherweise größer als die Extrusionsgeschwindigkeit des Extrudates aus der Düse, wodurch dieses eine zusätzliche Zugverformung erfährt. In FDM-Verfahren zur Herstellung additive gefertigter Bauteile werden typischerweise Verfahrgeschwindigkeiten von 20-50 mm/s gewählt. Bessere Ergebnisse werden üblicherweise mit niedrigen Verfahrgeschwindigkeiten erreicht.

Im erfindungsgemäßen Verfahren ist es dagegen vorteilhaft, Verfahrgeschwindigkeiten (Applikationsgeschwindigkeiten) von über 20 mm/s, bevorzugt > 50 mm/s und ganz besonders bevorzugt > 100 mm/s einzustellen. Die Auftragsschichtdicke sowie die Auftragsschichtbreite sind dabei durch das Verhältnis von Austragsgeschwindigkeit des Materials aus einer Austragsdüse, der Düsengeometrie, dem Materialdruck, der Verfahrgeschwindigkeit der Düse sowie Abstand der Düse von der Substratoberfläche steuerbar. Ist die Austragsgeschwindigkeit aus der Düse geringer als die Verfahrgeschwindigkeit und der Düsenabstand zum Substrat geringer als der Düsendurchmesser, so entstehen Beschichtungen mit einer Auftragsschichtdicke, die kleiner als der Düsendurchmesser ist. Wenn der Düsenabstand zum Substrat größer ist als der Düsendurchmesser und die Verfahrgeschwindigkeit ungleich der Austrittsgeschwindigkeit ist, so erfolgt keine kontinuierliche und gleichmäßige Schichtablage, weshalb diese Ausführungsform nicht bevorzugt wird.

Ist die Viskosität des Hotmelts am Düsenausgang zu hoch, so wird die Austragsgeschwindigkeit durch den Druckaufbau im Druckkopf und die maximale Förderleistung begrenzt. Weiter verursacht ein hoher Druck am Düsenkopf aufgrund einer hohen Hotmelt-Viskosität typischerweise eine deutliche Spritzquellung bis hin zu einer periodisch pulsierenden Spritzquellung am Düsenausgang.

Die maximale Verfahrgeschwindigkeit, bei der noch eine kontinuierliche Schichtablage mit einem Schichtdickendurchmesser kleiner dem Düsendurchmesser erfolgt, ist deshalb ein guter Richtwert für einen stabilen Prozesszustand. Die Verfahrgeschwindigkeit ist weiterhin die bevorzugte Einstellgröße für einen FDM-Drucker, aus der im Druckprogramm bei vorgegebenem Schichtabstand und Düsengeometrie die gewünschte Austragsmenge berechnet wird und entsprechend die Materialfördergeschwindigkeit eingestellt wird.

Über die Verfahrgeschwindigkeit eines Druckkopfes mit einer 0.4 mm-Durchmesser Runddüse und bei einem angenommenen Substratabstand von 0.2 mm kann auch die Verweilzeit im beheizten Teil des Druckkopfes mit einem Volumen von beispielsweise ca. 200 mm$^3$ berechnet werden.

Das erfindungsgemäße Verfahren ist besonders für die Verarbeitung von hochmolekularen Schmelzklebstoffen geeignet, die eine Molekulargewicht $M_w$ nach GPC in DMF/LiBr (1%) gegen Polystyrol-Standards und nach universeller Kalibrierung über einen Viskositätsdetektor von > 30000, bevorzugt > 50000, besonders bevorzugt > 80000, ganz besonders bevorzugt > 100000 g/mol aufweisen und/oder einen Speichermodul G' (Platte/Platte-Oszillationsviskosimeter gemäß ISO 6721-10 bei einer Frequenz von 1/s) bei 20 °C oberhalb des Schmelzpunkts von $\geq 1\cdot10^4$ Pa, bevorzugt $\geq 5\cdot10^4$ Pa, besonders bevorzugt $\geq 1\cdot10^5$ Pa und ganz besonders bevorzugt $\geq 5\cdot10^5$ Pa aufweisen.

Besonders geeignete Hotmelts für den Einsatz in dem erfindungsgemäßen Verfahren zeichnen sich weiter durch eine langsame Kristallisation unterhalb der Schmelztemperatur aus. Dadurch ermöglicht man lange offene Zeiten des Klebstoffes bei Temperaturen unterhalb der Schmelztemperatur im Gegensatz zu klassischen Hotmelts, die bevorzugt heiß, das heißt bei Temperaturen um den Schmelzpunkt, gefügt werden. In einer besonderen bevorzugten Ausführungsform werden im erfindungsgemäßen Verfahren Hotmelts eingesetzt die eine lange offene Zeit von $\geq 10$ Sekunden, bevorzugt $\geq 30$ Sekunden, besonders bevorzugt $\geq 1$ min und besonders bevorzugt $\geq 5$ min bei einer Temperatur $\leq$ (Schmelzpunkt - 10 °C (bevorzugt -20 °C und besonders bevorzugt -30 °C aufweisen) aufweisen. In einer weiteren besonders bevorzugten Ausführungsform haben diese Hotmelts nach schneller Abkühlung durch Auftrag auf eine Substrat mit einer Temperatur von $\leq 30$ °C und $\geq 10$ °C direkt nach Abkühlung auf die Substrattemperatur einen Speichermodul G' (Platte/Platte-Oszillationsviskosimeter gemäß ISO 6721-10 bei einer Frequenz von 1/s) von $\geq 1\cdot10^5$ Pa, bevorzugt $\geq 2\cdot10^5$ Pa, besonders bevorzugt $\geq 3\cdot10^5$ Pa und ganz besonders bevorzugt $\geq 4\cdot10^5$ Pa und $\leq 5\cdot10^7$ Pa, bevorzugt $\leq 1\cdot10^7$ Pa und besonders bevorzugt $\leq 5\cdot10^6$ Pa.

Die einzelnen Extrudat-Filamente, wie sie beispielsweise am Düsenausgang entstehen, können abhängig von der Düsengeometrie verschiedenste Gestalt annehmen. Bevorzugt werden rotationssymmetrische, kastenförmige oder schlitzförmige Düsengeometrien eingesetzt, die die Applikation von Beschichtungsstreifen mit einer Beschichtungsdicke von $\geq 20$ $\mu$m bis $\leq 5$ mm aufweisen, bevorzugt $\geq 50$ $\mu$m bis $\leq 2$ mm, besonders bevorzugt 80 $\mu$m bis $\leq 1$ mm und ganz besonders bevorzugt 80 $\mu$m bis $\leq 0.5$ mm ermöglichen.

Bei den Applikationstemperaturen im erfindungsgemäßen Verfahren reagieren die freien NCO-Gruppen, so dass unter anderem eine Nachvernetzung des aufgetragenen Materials erfolgen kann. Insofern kann das Material auch als reaktiv oder latent reaktiv bezeichnen werden. Die Reaktionspartner für die NCO-Gruppen können im Material frei vorliegen, beispielsweise in Form von freien Hydroxyl- oder Aminogruppen, Urethangruppen, Harnstoffgruppen, Wasser oder auch durch eine thermische Öffnung von durch Addition erhaltenen funktionellen Gruppen generiert werden. Der Begriff "Nachvernetzung" schließt auch den Fall ein, dass das Material vor der Applikation nicht vernetzt war.

Vorteilhaft für das erfindungsgemäße Verfahren ist, wenn die Verteilung des Isocyanats in der polymeren Matrix vor der Applikation auf ein Substrat schlechter/gröber ist als nach der Applikation auf ein Substrat. Dieses wird erreicht, indem ein Polyisocyanat bei Verarbeitungstemperaturen von > 120 °C, bevorzugt >150 °C, besonders bevorzugt > 180 °C und ganz besonders bevorzugt > 200°C geschmolzen wird und in die Polymermatrix eingearbeitet wird, wobei das Isocyanat während der Applikation schmilzt und sich zumindest teilweise in der polymeren Matrix löst beziehungsweise eine mittlere Teilchengröße nach Applikation in der polymeren Matrix von < 50 $\mu$m (bevorzugt < 20 $\mu$m, besonders bevorzugt < 10 $\mu$m und ganz besonders bevorzugt < 5$\mu$m) aufweist. Die mittlere Teilchengröße kann dabei an einem Schnittbild mikroskopisch ausgemessen werden.

Vorteilhaft ist weiterhin, wenn das Polyisocyanat vor der Applikation als reaktiver Schmelzklebstoff schon als heterogenes Gemisch mit der Polymer-Matrix vorliegt. Das Einarbeiten des festen Polyisocyanats in das schmelzbare Polymer kann dabei nach verschiedenen Methoden erfolgen. Eine geeignete Methode ist die Co-Fällung oder das Co-Ausfrieren einer wässrigen Polyisocyanatdispersion zusammen mit einer wässrigen Schmelzklebstoffdispersion. Eine andere Methode ist das gemeinsame Applizieren und Trocknen einer wässrigen Schmelzklebsotffdispersion und einer wässrigen Polyisocyanatdispersion. Eine andere geeignete Methode ist die Mischung von Pulvern aus einem mikronisierten Schmelzklebstoff Polymermatrix und einem festen mikronisierten Polyisocyanat. Eine weitere Methode ist das kryogene Mahlen eines Schmelzklebstoffs zusammen mit einem festen Polyisocyanat. Eine weitere Methode ist das Vermischen eines festen Polyisocyanats mit einem Schmelzklebstoff in einem thermoplastischen Mischprozess mittels Mischextruder, Kneter, Walze oder einem anderen geeigneten mechanischen Mischverfahren oberhalb der Schmelztemperatur des Thermoplasten.

Bei allen diesen Verfahren zur Herstellung eines heterogenen Gemisches aus der polymeren Matrix und des Polyisocyanats wird die Temperatur vorzugsweise so gewählt, dass eine Vorreaktion des Isocyanats mit der polymeren Matrix weitgehend verhindert wird. Weitgehend verhindert heißt in diesem Kontext, dass mehr als 70% (bevorzugt 80% und ganz besonders bevorzugt 90%) des Isocyanats noch unreagiert in der heterogenen Mischung vorliegen.

Vor der Applikation des reaktiven Schmelzklebstoffes im erfindungsgemäßen Verfahren liegt somit vorzugsweise eine heterogene Mischung mindestens eines festen oder verkapselten Isocyanats mit einem festen Polymer vor. Diese heterogene Mischung wird im erfindungsgemäßen Verfahren vor Applikation auf ein Substrat entsprechend erwärmt und vorzugsweise über mindestens eine Scherkraft von > 10/s für einen Zeitraum von > 0,5 sec gemischt. Dabei kann sich die Verteilung des Isocyanats in der polymeren Matrix hin zu einer besseren Verteilung bzw. größeren Oberfläche der Grenzfläche zwischen Polyisocyanat und polymere Matrix verändern, bevorzugt bis hin zu einer homogenen Mischung mit Teilchengrößen des Polyisocyanats innerhalb der polymeren Matrix von < 20 $\mu$m (bevorzugt < 10 $\mu$m, besonders bevorzugt 5 < $\mu$m und ganz besonders bevorzugt < 1 $\mu$m).

Die gute Verteilung des Polyisocyanats in der Polymeren Matrix nach Auftrag auf einem Substrat kann nach einer Zeit von < 14 d (bevorzugt < 7 d und besonders bevorzugt <3 d) zu einer Erhöhung der Schmelzviskosität der polymeren Matrix bei einer Temperatur 20°C oberhalb deren Schmelzpunkt von mindestens 50% (bevorzugt 100% und besonders bevorzugt 200%) führen.

Im erfindungsgemäßen Verfahren können durch die Möglichkeit der Reaktion der NCO-Gruppen zwei Aspekte der Verarbeitung von Schmelzklebstoffen adressiert werden. Zum Einen können thermische Abbaureaktionen im schmelzbaren Polymer abgemildert werden. Solche Reaktionen können beispielsweise die Spaltung von Urethan- oder Harnstoffgruppen sein. Dieser Aspekt kommt bereits bei niedrigeren Gehalten an verfügbaren NCO-Gruppen zum Tragen. Zum Anderen werden auch die Parameter "tack" und "softening point" der Schmelzklebstoffe vorteilhaft beeinflusst. Dieser Aspekt kommt bei eher hohen Gehalten an verfügbaren NCO-Gruppen zum Tragen.

Durch die Nachvernetzung des aufgetragenen Materials kann der Schmelzemodul um mindestens 50% und die Wärmebeständigkeit einer Verklebung um mindestens 10 °C weiter erhöht werden.

Die Einbringung der NCO-Gruppen in das Material erfolgt bevorzugt bei der Mischung des schmelzbaren Polymeren mit einer die NCO-Gruppen enthaltenden Komponente zum zu verarbeitenden Material. Die Mischung wird bevorzugt unter Scherung bei Temperaturen unterhalb des Schmelzpunkts des schmelzbaren Polymers durchgeführt.

In einer bevorzugten Ausführungsform liegt der Gehalt an freien NCO-Gruppen in einem Bereich von $\geq 0.1$ Gewichts-% bis $\leq 10$ Gewichts-% (titrimetrische Bestimmung nach DIN EN ISO 11909), bezogen auf das Gesamtgewicht des ein schmelzbares Polymer enthaltenden Materials(bevorzugt $\geq 0.3$ Gewichts-% bis $\leq 7$ Gewichts-%, besonders bevorzugt $\geq 0.5$ Gewichts-% bis $\leq 5$ Gewichts-%).

Die freien NCO-Gruppen in dem das schmelzbare Polymer aufweisenden Material können mehrheitlich endständig, mehrheitlich innenständig oder zu gleichen Teilen endständig und innenständig vorliegen. In einer weiteren bevorzugten Ausführungsform liegen die freien NCO-Gruppen in dem das schmelzbare Polymer enthaltenden Material zu $\geq 60$ mol-% bis $\leq 100$ mol-% (bevorzugt $\geq 75$ mol-% bis $\leq 100$ mol-% und mehr bevorzugt $\geq 90$ mol-% bis $\leq 100$ mol-%) als endständige NCO-Gruppen vor. Die Unterscheidung zwischen endständigen und innenständigen NCO-Gruppen kann mittels NMR-Spektroskopie erfolgen.

In einer weiteren bevorzugten Ausführungsform liegen die freien NCO-Gruppen in Form von Polyisocyanaten mit einem Erweichungspunkt nach DSC als Glaspunkt (in Abwesenheit eines Schmelzpunktes) oder als Schmelzpunkt ermittelt von $\geq 40$ °C (bevorzugt $\geq 60$ °C, besonders bevorzugt $\geq 70$ °C) vor.

In einer weiteren bevorzugten Ausführungsform weist das schmelzbare Polymer weiterhin wenigstens eine der folgenden Eigenschaften auf:

A1) einen Speichermodul G' (Platte/Platte-Oszillationsviskosimeter gemäß ISO 6721-10 bei einer Frequenz von 1/s) bei 20 °C oberhalb des Schmelzpunkts von $\geq 1.10^4$ Pa, bevorzugt $\geq 5 \cdot 10^4$ Pa, besonders bevorzugt $\geq 1 \cdot 10^5$ Pa; ganz besonders bevorzugt $\geq 2 \cdot 10^5$ Pa;

A2) einen Speichermodul G' (Platte/Platte-Oszillationsviskosimeter gemäß ISO 6721-10 bei einer Frequenz von 1/s) bei 10 °C unterhalb des Schmelzpunkts bei vorangegangener Aufheizung auf eine Temperatur von 20 °C oberhalb des Schmelzpunktes und anschließender Abkühlung mit einer Abkühlrate von 1 °C/min von $\leq 1 \cdot 10^7$ Pa, bevorzugt $\leq 5 \cdot 10^6$ Pa, besonders bevorzugt $\leq 1 \cdot 10^6$ Pa;

A3) der Speichermodul G' (Platte/Platte-Oszillationsviskosimeter gemäß ISO 6721-10 bei einer Frequenz von 1/s) des schmelzbaren Polymers bei der höchsten während des Applikationsprozesses erreichten Applikationstemperatur ist um den Faktor $\geq 10$ kleiner (bevorzugt $\geq 30$ kleiner, ganz besonders bevorzugt $\geq 100$ kleiner) ist als der Speichermodul G' (Platte/Platte-Oszillationsviskosimeter gemäß ISO 6721-10 bei einer Frequenz von 1/s) bei einer Temperatur von 20° oberhalb des Schmelzpunktes des schmelzbaren Polymers,

A4) mindestens zwei der Eigenschaften A1) bis A3).

In einer weiteren bevorzugten Ausführungsform liegen die NCO-Gruppen in dem das schmelzbare Polymer aufweisenden Material in einer separaten Komponente mit einem mittleren Molekulargewicht Mn (bestimmt mittels Gelpermeationschromatographie gegen Polystyrol-Standards und N,N-Dimethylacetamid als Elutionsmittel) von $\geq 340$ g/mol bis $\leq 10000$ g/mol (bevorzugt $\geq 400$ g/mol bis $\leq 8000$ g/ mol und mehr bevorzugt $\geq 600$ g/mol bis $\leq 5000$ g/mol). Im Fall von niedermolekularen Verbindungen genügt auch die Molekulargewichtsberechnung anhand der Summenformel. In Frage kommen beispielsweise NCO-terminierte Urethan-Prepolymere oder Isocyanurate wie das HDI-Trimer, IPDI-Trimer, $H_{12}$MDI-Trimer, Dimere wie das IPDI-Dimer, TDI-Dimer, MDI-Dimer oder $H_{12}$MDI-Dimer oder Mischdimere oder Mischtrimere der genannten Isocyanate sowie handelsüblich gebräuchlicher Isocyanate und Isocyanatederivate mit Isocyanatgehalten $\geq 1\%$ und $\leq 40\%$, bevorzugt $\geq 3\%$ und $\leq 30\%$ und ganz besonders bevorzugt $\geq 5\%$ und $\leq 25\%$. In einer bevorzugten Ausführungsform sind die Polyisocyanate Feststoffe mit einem Schmelzpunkt (bestimmt mittels DSC) von > 50 °C (bevorzugt > 60 °C, besonders bevorzugt > 70 °C).

In einer weiteren bevorzugten Ausführungsform liegen in dem das schmelzbare Polymer aufweisenden Material weiterhin freie Gruppen mit Zerewitinoff-aktiven H-Atomen vor. Vorzugsweise handelt es sich hierbei um Alkohole, Thiole, Polyamine, Urethane und/oder Harnstoffe. Zusammen mit den NCO-Gruppen können dann Vernetzungsreaktionen im aufgetragenen Material ablaufen. In Frage kommen zum Beispiel Polyesterpolyole, Polyetherpolyole, Polycarbonatpolyole, Polyacrylatpolyole, Polyurethane, Polythiole, Polyharnstoffe oder einer Kombination aus mindestens zwei hiervon.

In einer bevorzugten Ausführungsform beträgt die Temperatur des Extrudates am Düsenkopf ≥ 120 °C, bevorzugt ≥ 150 °C und besonders bevorzugt ≥ 200 °C und ganz besonders bevorzugt ≥ 250°C. Das Material wird bevorzugt vor Gebrauch im erfindungsgemäßen Verfahren getrocknet und hat einen Wassergehalt von ≤ 3 Gew.-%, bevorzugt ≤ 1 Gew.-% und besonders bevorzugt ≤ 0.5 Gew.-% und ganz besonders bevorzugt ≤ 0.1 Gew.-%.

In einer weiteren bevorzugten Ausführungsform erfährt das Material im erfindungsgemäßen Verfahren ein Wärmeintegral, definiert als Fläche der Temperaturverweilzeit oberhalb der Schmelzetemperatur vernetzbaren Materials nach Zuführung in den Extruder und vor Applikation auf das Substrat, von ≤ 1000 °C·min, bevorzugt ≤ 500 °C·min, bevorzugt ≤ 200 °C·min und ganz besonders bevorzugt ≤ 100 °C·min und ≥ 2 °C·min, bevorzugt ≥ 5 °C·min und besonders bevorzugt ≥ 10 °C·min. Das Wärmeintegral wird beispielhaft berechnet für eine Verweilzeit von 5 min bei 200°C als 200°C . 5 min = 1000 °C·min.

In einer weiteren bevorzugten Ausführungsform wird bei dem Auftrag des Materials auf das Substrat nach dem erfindungsgemäßen Verfahren ein Druck von ≥ 0,1 bar bevorzugt ≥ 0,5 bar bevorzugt, besonders bevorzugt ≥ 0,8 bar und ganz besonders bevorzugt ≥ 1bar und ≤ 50 bar, bevorzugt ≤ 20 bar, besonders bevorzugt ≤ 10 bar auf das Substrat aufgebaut. Der hier behandelte Druck ist die Gesamtsumme aus dem Druck, der durch das Fördern des Hotmelts entsteht sowie dem Druck, den die Austragsöffnung mitsamt Austragselement, beispielsweise durch Federbelastung, pneumatischem oder hydraulischem Gegendruck, auf das Substrat ausübt.

Neben dem schmelzbaren Polymer kann das Material noch weitere Additive wie Füllstoffe, Pigmente, Adhäsionsverbesserer, Verlaufshilfsmittel, Entschäumer, Oxidations- und Hydrolyse-Stabilisatoren und dergleichen, aber auch weitere Polymere, enthalten. Der Gesamtgehalt an Additiven im Material kann beispielsweise ≥ 0,5 Gewichts-% bis ≤ 20 Gewichts-% betragen.

Das schmelzbare Polymer kann nach Erwärmen auf eine Temperatur von 20°C oberhalb des Schmelzpunktes und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 100 Minuten, mehr bevorzugt ≥ 3 Minuten bis ≤ 80 Minuten, noch mehr bevorzugt ≥ 5 Minuten bis ≤ 60 Minuten), ein Speichermodul G' (bestimmt bei der jeweils herrschenden Temperatur mit einem Platte/Platte-Oszillationsviskosimeter gemäß ISO 6721-10 bei einer Frequenz von 1/s) von ≥ 1·10$^5$ Pa, bevorzugt ≥ 2·10$^5$ Pa, besonders bevorzugt ≥ 3·10$^5$ Pa und ganz besonders bevorzugt ≥ 4·10$^5$ Pa bis ≤ 10 MPa bevorzugt ≤ 5 MPa und besonders bevorzugt ≤ 1 MPa aufweisen und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Frequenz von 1/s) von ≥ 20 MPa (bevorzugt ≥ 50, besonders bevorzugt ≥ 100 MPa) aufweisen.

Das schmelzbare Polymer kann ferner einen Betrag der komplexen Viskosität |$\eta$*| (bestimmt durch Viskosimetriemessung in der Schmelze mit einem Platte/Platte-Oszillationsviskosimeter gemäß ISO 6721-10 bei 20°C oberhalb der Schmelztemperatur °C und einer Frequenz von 1/s) von ≥ 100 Pas bis ≤ 5000000 Pas aufweisen. Vorzugsweise beträgt |$\eta$*| bei diesen Messbedingungen ≥ 500 Pas bis ≤ 1000000 Pas, mehr bevorzugt ≥ 1000 Pas bis ≤ 500000 Pas.

Der Betrag der komplexen Viskosität |$\eta$*| beschreibt das Verhältnis der viskoelastischen Moduln G' (Speichermodul) und G'' (Verlustmodul) zur Anregungsfrequenz $\omega$ in einer dynamisch-mechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Bei den komplexen Viskositäten im erfindungsgemäß angegebenen Bereich kann davon ausgegangen werden, dass bei längerer Lagerung bei Raumtemperatur in dem eingesetzten schmelzbaren Polymer keine oder nur technisch unbedeutende Klebrigkeit ("tackiness") auftritt.

In einer weiteren bevorzugten Ausführungsform wird das Filament mit einer Geschwindigkeit von ≥ 20 mm/s aufgetragen. Hierunter ist die Relativgeschwindigkeit von Austragsöffnung und Substrat zu verstehen. Vorzugsweise beträgt die Auftragsgeschwindigkeit ≥ 50 mm/s, besonders bevorzugt ≥ 100 mm/s

In einer weiteren bevorzugten Ausführungsform weist das schmelzbare Polymer eine Schmelzviskosität (Platte/Platte-Oszillationsviskosimeter gemäß ISO 6721-10 bei einer Frequenz von 1/s) bei einer Temperatur von 20 °C über dem Schmelzpunkt T$_m$ von ≥ 1000 Pas bis ≤ 500000 Pas auf.

In einer weiteren bevorzugten Ausführungsform ist das schmelzbare Polymer derart ausgewählt, dass nach einer Lagerung bei der maximal erreichten Applikationstemperatur für eine Zeitdauer von ≤ 1 Stunde (vorzugsweise ≤ 30 Minuten, mehr bevorzugt ≤ 5 Minuten, besonders bevorzugt ≤ 1 Minute, ganz besonders bevorzugt < 10 Sekunden) der Speichermodul G' (DMA, dynamisch-mechanische Analyse gemäß DIN EN ISO 6721-1:2011 bei einer Frequenz von 1/s) sich mehr als verdoppelt oder aber der Speichermodul G'(DMA, dynamisch-mechanische Analyse gemäß DIN EN ISO 6721-1:2011 bei einer Frequenz von 1/s) auf einen Wert von weniger als die Hälfte des Ausgangswertes sinkt. Die Verringerung von G' ist das bevorzugte Auswahlkriterium. Es wurde gefunden, dass die erfindungsgemäß bevorzugt einzusetzenden Polymere bei ihrer irgendwann unvermeidlichen thermischen Zersetzung keine oder nur geringe Gelbildung zeigen. Dann verringert sich die Gefahr von Verstopfungen einer Austragdüse, trotz einsetzender Vernetzungsreaktion mit dem Isocyanat.

In einer weiteren bevorzugten Ausführungsform wird vor dem Auftragen des Materials dieses von einer Temperatur ≤ 40 °C bevorzugt ≤ 30 °C innerhalb von ≤ 5 Minuten (vorzugsweise ≤ 2 Minuten, mehr bevorzugt ≤ 1 Minute) auf die maximale Applikationstemperatur erwärmt.

In einer bevorzugten Ausführungsform wird das Material nach Produktion und vor Gebrauch überwiegend trocken bei einer Luftfeuchtigkeit ≤ 30% und bei Temperaturen ≤ 30°C gelagert und innerhalb von ≤ IJahr, bevorzugt ≤ 6 Monaten und ganz besonders bevorzugt ≤ 3 Monaten verbraucht. Anstelle oder in Kombination mit einer trockenen Lagerung kann das Material in einer gegen Luftfeuchtigkeit undurchlässigen Verpackung gelagert werden. Solche Verpackungen sind aus dem Lebensmittelbereich zur Lagerung von feuchtigkeitsempfindlichen Lebensmitteln bekannt.

In einer weiter bevorzugten Ausführungsform wird das erfindungsgemäße vernetzbare Material nach Produktion und vor Gebrauch unter Licht und Sauerstoffausschluss gelagert. Solche Verpackungen sind aus dem Lebensmittelbereich zur Lagerung von Licht und oxidationsempfindlichen Lebensmitteln bekannt.

In einer weiteren bevorzugten Ausführungsform wird das Material innerhalb des Austragselements auf die vorgesehene maximale Applikationstemperatur so erwärmt, dass die Viskosität des Materials bei dieser Temperatur eine Verringerung um mindestens den Faktor 10 (bevorzugt um mindestens den Faktor 50, weiter bevorzugt um mindestens den Faktor 100) erfährt.

In einer weiteren bevorzugten Ausführungsform beträgt der Abstand zwischen der Oberfläche des Substrats und der Austragsöffnung des Austragselementes ≤ 1 mm. Bevorzugt ist ein Abstand von ≤ 0.5 mm, mehr bevorzugt ≤ 0.1 mm. In einer weiteren bevorzugten Ausführungsform des erfindungsgemäßen Verfahrens wird die Düse direkt mit dem Substrat kontaktiert beziehungsweise hat einen negativen Abstand zum Substrat. Diese Ausführungsform ist besonders vorteilhaft, wenn das Substrat weich elastisch ist und gegenüber der Düse und dem Druck des extrudierten Hotmelts nachgeben kann. In dieser besonderen Ausführungsform liegt der Austragsdruck des Hotmelts aus der Düse über dem Stauchmodul des Substrats. Diese Ausführungsform ist besonders vorteilhaft bei der Beschichtung von Geweben, Gelegen, Schäumen, weichen elastischen und porösen Materialien, da hier ein besonders guter Kontakt erzeugt werden kann.

Das Austragselement mit seiner Austragsöffnung kann mit einem konstanten Druck im Kontakt mit dem ersten Substrat über das erste Substrat gefahren werden. Der Druck kann zum Beispiel über ein Federelement, ein Hydraulikelement oder einen Druckaufnehmer eingestellt werden. Vorteilhaft bei diesem Verfahren, besonders in Kombination mit einem eventuellen negativen Abstand der Austragsdüse zum Substrat, ist, dass eventuelle Unebenheiten oder Oberflächenungenauigkeiten des Substrats durch die konstante Druckfahrweise ausgeglichen werden können, ohne die Programmierung des Druckauftrags kontinuierlich verändern zu müssen.

Alternativ oder zusätzlich kann der Abstand der Düse zum Substrat durch eine kontinuierliche Abstandsmessung, zum Beispiel mittels Lasermessung, kontinuierlich vermessen und kontinuierlich neu justiert werden.

In einer weiteren bevorzugten Ausführungsform wird das Material mit einem Druck von ≥ 0,001 bar, bevorzugt >0,1 bar, mehr bevorzugt ≥ 0.5 bar auf das erste Substrat aufgetragen.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind ausgewählt aus der Gruppe umfassend: TDI, MDI, HDI, PDI, H12MDI, IPDI, TODI, XDI, NDI, Decandiisocyanat oder einer Kombination aus mindestens zwei hiervon. Besonders bevorzugte Polyisocyanate sind HDI, PDI, H12MDI, MDI und TDI.

In einer weiteren bevorzugten Ausführungsform enthält das schmelzbare Polymer ein Polyurethan, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zum Polyurethan weiterhin Diole des Molekulargewichtsbereichs von ≥ 62 bis ≤ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat ($H_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Die Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Ohne auf eine Theorie beschränkt zu sein wird angenommen, dass Polyurethane auf der Basis der zuvor diskutierten nicht-symmetrischen Polyisocyanate und Polyesterpolyole mit den angegebenen Stockpunkten derart aufgebaut sind, dass die von den Polyisocyanaten stammenden Gruppen im Polymer Weichsegmente darstellen und die von den Polyesterpolyen stammenden Gruppen im Polymer Hartsegmente darstellen.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-$C_4$- bis $C_{10}$-Dicarbonsäuren mit einem oder mehreren $C_2$- bis $C_{10}$-Diolen. Sie weisen bevorzugt ein zahlenmittleres Molekulargewicht $M_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol, Polycaprolactone. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass die Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht $M_n$ (GPC, gegen Polystyrol-Standards) von ≥ 4000 g/mol bis ≤ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Frequenz von 1/s) von ≥ 2000 Pas bis ≤ 500000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

In einer weiteren bevorzugten Ausführungsform des erfindungsgemäßen Verfahrens weist das schmelzbare Polymer nach Erwärmen auf 20 °C oberhalb seines Schmelzpunktes und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 100 Minuten, mehr bevorzugt ≥ 5 Minuten bis ≤ 60 Minuten), ein Speichermodul G' (bestimmt bei der jeweils herrschenden Temperatur mit einem Platte/Platte-Oszillationsviskosimeter gemäß ISO 6721-10 bei einer Frequenz von 1/s) von ≥ 100 kPa bis ≤ 10 MPa auf und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Frequenz von 1/s) von ≥ 20 MPa (bevorzugt ≥ 50 MPa, bevorzugt ≥ 100 MPa) auf.

In einer weiteren bevorzugten Ausführungsform wird das aufgetragene Material mit einem zweiten Substrat kontaktiert. Somit kann eine Verklebung erfolgen. Vorzugsweise erfolgt die Verklebung unter Druck, bis das Polymer auf Raumtemperatur abgekühlt ist. Die Kontaktierung erfolgt vorzugsweise unter Druck von ≥ 0,1 bar und ≤ 100 bar, bevorzugt ≥ 0,5 bar und ≤ 20 bar, besonders bevorzugt ≥ 1 bar und ≤ 10 bar.

Die beiden Substrate können gleich oder verschieden sein.

Als Substrate geeignet sind beispielsweise Papier, Pappe, Holz, Metall, Keramik, Leder, synthetisches Leder, Gummimaterialien, beliebige Kunststoffe, wie unter anderem Polyurethan basierte Kunststoffe und deren Schäume, sowie Homo- oder Mischpolymerisate von Vinylchlorid. Polyvinylacetat, Polyethylenvinylacetat. In einer weiteren bevorzugten Ausführungsform weist das zweite Substrat einen Schmelzklebstoff auf und dieser wird mit dem aufgetragenen Material kontaktiert. Vorzugsweise ist dieser Schmelzklebstoff das gleiche Material wie bereits im erfindungsgemäßen Verfahren eingesetzt oder enthält wenigstens auch das im erfindungsgemäßen Verfahren eingesetzte schmelzbare Polymer. Die Kontaktierung erfolgt vorzugsweise unter Druck von ≥0,1 bar und ≤ 100 bar, bevorzugt ≥ 0,5 bar und ≤ 20 bar, besonders bevorzugt ≥ 1 bar und ≤ 10 bar. Es ist alternativ bevorzugt, dass die Temperatur des Schmelzklebstoffes des zweiten Substrats ≤ 10 °C, vorzugsweise ≤ 20 °C, mehr bevorzugt ≤ 30 °C unterhalb der Schmelztemperatur dieses Klebstoffes liegt. Weiter ist es bevorzugt, dass das Kontaktieren bei einer Temperatur von ≤ 40 °C, bevorzugt ≤ 30 °C, erfolgt.

In einer weiteren bevorzugten Ausführungsform wird das Material innerhalb der Düse auf die maximale Applikationstemperatur erwärmt, das Material wird mit einer Eintragsgeschwindigkeit in die Düse eingetragen, mit einer Austragsgeschwindigkeit aus der Düse ausgetragen und die Austragsgeschwindigkeit ist größer als die Eintragsgeschwindigkeit. Die Austragsgeschwindigkeit kann zum Beispiel 3-mal, 4-mal oder bis zu 10-mal größer als die Eintragsgeschwindigkeit sein. Die konkreten Geschwindigkeitsverhältnisse hängen vom Durchmesser eines Filaments des in die Düse eingetragenen Materials und von der Filamentgeometrie des ausgetragenen Materials ab.

In einer weiteren bevorzugten Ausführungsform ist innerhalb der Düse das wenigstens teilweise geschmolzene Material einem Druck von ≥ 0.5 MPa ausgesetzt. Der Druck kann auch ≥ 1 MPa oder ≥ 5 MPa betragen.

In einer weiteren bevorzugten Ausführungsform wird die Düse so nahe an das Substrat herangeführt, dass der Materialdruck in der Düse über den berechneten theoretischen Druck steigt, da der Düsenabstand zum Substrat kleiner ist als der mittlere Durchmesser der Düse. Der Druck kann auch ≥ 1 MPa oder ≥ 2 MPa betragen.

In einer weiteren bevorzugten Ausführungsform ist das Verfahren ein Verfahren zur Herstellung eines Gegenstandes aus dem ein schmelzbares Polymer enthaltenden Material und das Verfahren umfasst die Schritte:

I) Auftragen eines Filaments des zumindest teilweise geschmolzenen Materials auf einen Träger, so dass eine Lage des Materials erhalten wird, welche einem ersten ausgewählten Querschnitt des Gegenstands entspricht;

II) Auftragen eines Filaments des zumindest teilweise geschmolzenen Materials auf eine zuvor aufgetragene Lage des Materials, so dass eine weitere Lage des Materials erhalten wird, welche einem weiteren ausgewählten Querschnitt des Gegenstands entspricht und welche mit der zuvor aufgetragenen Lage verbunden ist;

III) Wiederholen des Schritts II), bis der Gegenstand gebildet ist.

In dieser Ausführungsform wird ein Gegenstand schichtweise aufgebaut. Insofern handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 2$ bis $\leq 20$ Wiederholungen für das Auftragen durchgeführt werden.

Ein elektronisches Modell des zu bildenden Gegenstands liegt zweckmäßigerweise in einem CAD-Programm vor. Das CAD-Programm kann dann Querschnitte des Modells berechnen, die durch Auftragen des Filaments zu Querschnitten des Gegenstands werden.

Schritt I) betrifft den Aufbau der ersten Lage auf einen Träger. Anschließend wird so lange Schritt II) ausgeführt, in dem auf zuvor aufgetragene lagen des Materials weiter Lagen aufgetragen werden, bis das gewünschte Endergebnis in Form des Gegenstands erhalten wird. Das zumindest teilweise aufgeschmolzene Material (in der Terminologie des 3D-Drucks auch Aufbaumaterial genannt) verbindet sich mit bereits bestehenden Lagen des Materials, um eine Struktur in z-Richtung aufzubauen.

In einer weiteren bevorzugten Ausführungsform ist das Substrat ein Textil, eine Folie, ein Papier, ein Karton, ein Schaum, ein Formbauteil, ein Teil eines Schuhs, eine Leiterplatte für elektronische Schaltungen, ein Elektronikgehäuseteil oder ein elektronisches Bauteil.

Die Erfindung betrifft weiterhin ein verdruckbares Material enthaltend ein schmelzbares Polymer, wobei das schmelzbare Polymer ein Polyurethan enthält, das freie NCO-Gruppen aufweist.

Ein weiterer Gegenstand der Erfindung ist die Verwendung eines erfindungsgemäßen, ein schmelzbares Polymer enthaltenden Materials zur Herstellung von Gegenständen mittels additiver Fertigungsverfahren.

Einsatzstoffe:

Dispercoll® U 54, eine anionische, hochmolekulare Polyurethandispersion, bezogen von der Firma Covestro Deutschland AG, wurde eingesetzt wie erhalten. Bei Dispercoll® U 54 handelt es sich um einen Rohstoff zur Herstellung von thermoaktivierbaren Klebstoffen.

Technische Eigenschaften von Dispercoll® U 54:

| Name der Eigenschaft | Prüfverfahren | Einheit | Wert |
|---|---|---|---|
| pH-Wert | DIN ISO 976 | | 6,0-9,0 |
| Viskosität bei 20 °C Spindel L2 / 30 U/min | DIN 53019 | mPa*s | 40 - 600 |
| Nicht flüchtiger Anteil (1 g/1 h/ 125 °C) | DIN EN ISO 3251 | % | 49-51 |
| Dichte 20 °C | DIN 51757 | g/cm$^3$ | Ca. 1,1 |
| Mindestfilmbildetemperatur | DIN ISO 2115 | °C | Ca. 5 |

Desmodur® Z 2589 wurde bezogen von der Covestro Deutschland AG und eingesetzt wie erhalten. Desmodur® Z 2589 ist ein Isocyanurat-Harz aus Isophorondiisocyanat in Pulverform mit einer Partikelgröße (Volumenverteilung d50) von ca. 1,6 $\mu$m, einem NCO-Gehalt von ca. 17 % (M105-ISO 11909) und einer Glasübergangstemperatur von 65 °C (ISO 11357). Die Molmasse Mn beträgt ca. 740 g/mol.

Dispercoll® BL XP 2514 wurde bezogen von der Covestro Deutschland AG und eingesetzt wie erhalten. Dispercoll® BL XP 2514 ist eine wässrige Suspension eines latent-reaktiven Feststoff-Isocyanats (TDI-Dimer). Die Lieferform ist ca. 40 % TDI-Dimer in Wasser mit einem NCO-Gehalt von 7,5-10,0 % (DIN EN ISO 11909, Anhang A) und einer Dichte (23 °C) von ca. 1,15 g/ml (DIN 51757). Molmasse Mn des TDI-Dimers beträgt ca. 350 g/mol.

Jeffamine® T 403 bezogen von Huntsman Corp., USA ist ein 3-funktionielles Polyetheramin mit einem Molekulargewicht von Mw = ca. 450 g/mol.

Weitere Hilfsstoffe:
Tamol® NN 4501 (45 %-ig in Wasser) Schutzkolloid; Hersteller: BASF AG, 67056 Ludwigshafen Borchigel® ALA; Verdickungsmittel; Hersteller: Borchers GmbH, D-40765 Monheim.

Lucramul 1820 Liquid, nicht-ionischer Emulgator, Hersteller: Levaco Chemicals, D-51368 Leverkusen

Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

Der Schmelzpunkt wurde mittels Differential Scanning Calorimetry (DSC) (Q2000, Fa. Ta Instruments) bei einer Aufheizrate von 5 °C/min anhand der 2. Aufheizung bestimmt.

Die Glasübergangstemperatur wurde mit Hilfe der dynamisch-mechanischen Analyse (DMA) (Q800, Fa. TA Instruments) gemäß DIN EN ISO 6721-1:2011 bei einer Frequenz von 1 Hz bestimmt. Zur Probenvorbereitung wurde aus dem Polymerfilament von ca. 3 mm Dicke bei 60 °C und einem Druck von 100 bar über einen Zeitraum von 60 Sekunden eine Folie gepresst mit einer Dicke von ca 0,4 mm.

Die Bestimmung des Isocyanatgehaltes erfolgte titrimetrisch (848 Titrino Plus, Fa. Metrohm) gemäß DIN EN ISO 11909.

Der Speichermodul G' 20 °C oberhalb des Schmelzpunktes wurde mittels eines Platte/Platte-Oszillationsviskosimeters (MCR301, Fa. Anton Paar) gemäß ISO 6721-10 bei einer Frequenz von 1 Hz und einer Amplitude von 1 % bestimmt.

Der Speichermodul G' bei 10 °C unterhalb des Schmelzpunktes bei vorangegangener Aufheizung auf eine Temperatur von 20 °C oberhalb des Schmelzpunktes und abschließender Abkühlung von 1 °C/min wurde mit einem Platte/Platte Oszillationsviskosimeters (MCR301, Fa. Anton Paar) gemäß ISO 6721-10 bei einer Frequenz von 1 Hz und einer Amplitude von 1 % bestimmt.

Der Speichermodul G' bei der höchsten während des Applikationsprozesses erreichten Applikationstemperatur wurde nach 60 Sekunden Aufheizung auf eine vorgegebene in einem Platte/Platte Oszillationsviskosimeters (ARES, Fa. TA-Instruments) gemäß ISO 6721-10 bei einer Frequenz von 1 Hz und einer Amplitude von 1 % bestimmt.

Der Restfeuchtegehalt wurde thermogravimetrisch ermittelt. Hierzu wurden 1 g des Strangs für 60 min bei 125 °C auf einer Trockenwaage (HG 53, Fa. Mettler Toledo) getrocknet und der Feststoffgehalt (%) ermittelt. Der Restfeuchtegehalt (Rf) wird rechnerisch als Differenz Rf= 100 % - Feststoffgehalt (%) ermittelt.

Erfindungsgemäßes Beispiel 1:

Herstellung einer Vernetzer-Dispersion:

100 g Entionisiertes Wasser, 0,5 g des Emulgators, 3,1 g des Desaktivierungsamins, 10 g des Verdickers, 0,7 g des Schutzkolloids und 67 g des Desmodur® Z 2589 werden vorgelegt und mit einer Dissolverscheibe bei 2000 rpm innnerhalb von 15 min. zu einer homogenen Suspension vermischt.

1000 g der wässrigen Polyurethandispersion Dispercoll® U 54 (50 % in Wasser) wurde mit 71,4 g der Vernetzerdispersion vermischt und für 3 min mit einem Laborrührer (Fa. Heidolph Instruments GmbH & CO. KG) gerührt. Anschließend wurde das Gemisch umgehend für 24 Stunden bei -18 °C und dann für 24 h bei 23 °C gelagert. Anschließend wurde das enthaltende grobkörnige Gemisch filtriert und der körnige Rückstand durch ein 4 mm Sieb gesiebt und für 24 h bei 30 °C in einem Umlufttrockenschrank getrocknet. Erhalten wurde ein weißes grobkörniges Pulver mit einem Restfeuchtegehalt von < 2 %. Anschließend wurde dieses in einem Doppelschneckenextruder (Micro Compounder, Fa. DSM Xplore) bei 100 °C, einer Verweilzeit < 5 min, bei 40 U/min durch eine Lochdüse mit einem Durchmesser von 3 mm zu einem Strang mit einem Durchmesser von ca. 3 mm verarbeitet. Der erhaltene Strang wurde in einem FDM-Drucker (X400CE, Fa. German RepRap), umgerüstet auf die Verarbeitung von 3 mm Strängen mit den folgenden Verfahrensbedingungen: Baumraumtemperatur = 23 °C, Extrusionsdüsen-Durchmesser = 0,8 mm, Extruder-Temperatur = 260 °C. Extrusionsgeschwindigkeit = 70 mm/s, verarbeitet. Das Volumen im Heizbereich der Düse beträgt ca. 0,2 mL, wodurch sich eine mittlere Verweilzeit des geschmolzenen Materials während des Applikationsprozesses von ca. 6 Sekunden ergibt.

Tabelle 1: Daten des im Doppelschneckenextruder extrudierten Materials

| | |
|---|---|
| Schmelzpunkt Tm (°C) | 45,0 |
| Glasübergangstemperatur Tg (°C) | -43,1 |
| NCO-Gehalt (%) | 0,73 |
| Speichermodul G' 20 °C oberhalb Tm (Pa) | 335000 |
| Speichermodul G' 10 °C unterhalb Tm (Pa) | 620000 |
| Speichermodul G' bei 200 °C (nach 60 sec) (Pa) | 253 |
| Speichermodul G' bei 200 °C ( nach 600 sec) (Pa) | 18900 |

(fortgesetzt)

| | |
|---|---|
| Verarbeitbar auf dem FDM-Drucker | Ja |

Erfindungsgemäßes Beispiel 2:

Herstellung einer Vernetzer-Dispersion:
100 g Entionisiertes Wasser, 0,5 g des Emulgators, 3,1 g des Desaktivierungsamins, 10 g des Verdickers, 0,7 g des Schutzkolloids und 67 g des Desmodur® Z 2589 werden vorgelegt und mit einer Dissolverscheibe bei 2000 rpm innnerhalb von 15 min. zu einer homogenen Suspension vermischt.

1000 g der wässrigen Polyurethandispersion Dispercoll® U 54 (50 % in Wasser) wurde mit 35,7 g der Vernetzerdispersion vermischt und für 3 min mit einem Laborrührer (Fa. Heidolph Instruments GmbH & CO. KG) gerührt. Anschließend wurde das Gemisch umgehend für 24 Stunden bei -18 °C und dann für 24 h bei 23 °C gelagert. Anschließend wurde das enthaltende grobkörnige Gemisch filtriert und der körnige Rückstand durch ein 4 mm Sieb gesiebt und für 24 h bei 30 °C in einem Umlufttrockenschrank getrocknet. Erhalten wurde ein weißes grobkörniges Pulver mit einem Restfeuchtegehalt von < 2 %. Anschließend wurde dieses in einem Doppelschneckenextruder (Micro Compounder, Fa. DSM Xplore) bei 100 °C, einer Verweilzeit < 5 min, bei 40 U/min durch eine Lochdüse mit einem Durchmesser von 3 mm zu einem Strang mit einem Durchmesser von ca. 3 mm verarbeitet. Der erhaltene Strang wurde in einem FDM-Drucker (X400CE, Fa. German RepRap), umgerüstet auf die Verarbeitung von 3 mm Strängen mit den folgenden Verfahrensbedingungen: Baumraumtemperatur = 23 °C, Extrusionsdüsen-Durchmesser = 0,8 mm, Extruder-Temperatur = 260 °C. Extrusionsgeschwindigkeit = 70 mm/s, verarbeitet. Das Volumen im Heizbereich der Düse beträgt ca. 0,2 mL, wodurch sich eine mittlere Verweilzeit des geschmolzenen Materials während des Applikationsprozesses von ca. 6 Sekunden ergibt.

Tabelle 2: Daten des im Doppelschneckenextruder extrudierten Materials

| | |
|---|---|
| Schmelzpunkt Tm (°C) | 44,7 |
| Glasübergangstemperatur Tg (°C) | -46,6 |
| NCO-Gehalt (%) | 0,38 |
| Speichermodul G' 20 °C oberhalb Tm (Pa) | 351000 |
| Speichermodul G' 10 °C unterhalb Tm (Pa) | 626000 |
| Speichermodul G' bei 200 °C (nach 60 sec) (Pa) | 432 |
| Speichermodul G' bei 200 °C ( nach 600 sec) (Pa) | 20600 |
| Verarbeitbar auf dem FDM-Drucker | Ja |

Erfindungsgemäßes Beispiel 3:

1000 g der wässrigen Polyurethandispersion Dispercoll® U 54 (50 % in Wasser) wurde mit 31,3 g Dispercoll® BL XP 2514 vermischt und für 3 min mit einem Laborrührer (Fa. Heidolph Instruments GmbH & CO. KG) gerührt. Anschließend wurde das Gemisch umgehend für 24 Stunden bei -18 °C und dann für 24 h bei 23 °C gelagert. Anschließend wurde das enthaltende grobkörnige Gemisch filtriert und der körnige Rückstand durch ein 4 mm Sieb gesiebt und für 72 h bei 23 °C in einem Umlufttrockenschrank getrocknet. Erhalten wurde ein weißes grobkörniges Pulver mit einem Restfeuchtegehalt von < 2 %. Anschließend wurde dieses in einem Doppelschneckenextruder (Micro Compounder, Fa. DSM Xplore) bei 100 °C, einer Verweilzeit < 5 min, bei 40 U/min durch eine Lochdüse mit einem Durchmesser von 3 mm zu einem Strang mit einem Durchmesser von ca. 3 mm verarbeitet. Der erhaltene Strang wurde in einem FDM-Drucker (X400CE, Fa. German RepRap), umgerüstet auf die Verarbeitung von 3 mm Strängen mit den folgenden Verfahrensbedingungen: Baumraumtemperatur = 23 °C, Extrusionsdüsen-Durchmesser = 0,8 mm, Extruder-Temperatur = 260 °C. Extrusionsgeschwindigkeit = 70 mm/s, verarbeitet. Das Volumen im Heizbereich der Düse beträgt ca. 0,2 mL, wodurch sich eine mittlere Verweilzeit des geschmolzenen Materials während des Applikationsprozesses von ca. 6 Sekunden ergibt.

Tabelle 3: Daten des im Doppelschneckenextruder extrudierten Materials

| | |
|---|---|
| Schmelzpunkt Tm (°C) | 45,2 |

(fortgesetzt)

| Glasübergangstemperatur Tg (°C) | -44,8 |
|---|---|
| NCO-Gehalt (%) | 0,47 |
| Speichermodul G' 20 °C oberhalb Tm (Pa) | 829000 |
| Speichermodul G' 10 °C unterhalb Tm (Pa) | 1090000 |
| Speichermodul G' bei 200 °C (nach 60 sec) (Pa) | 8240 (leichte Vorvernetzung des Materials vermutet) |
| Speichermodul G' bei 200 °C ( nach 600 sec) (Pa) | 32700 |
| Verarbeitbar auf dem FDM-Drucker | Ja |

Erfindungsgemäßes Beispiel 4:

1000 g der wässrigen Polyurethandispersion Dispercoll® U 54 (50 % in Wasser) wurde mit 65,5 g Dispercoll® BL XP 2514 vermischt und für 3 min mit einem Laborrührer (Fa. Heidolph Instruments GmbH & CO. KG) gerührt. Anschließend wurde das Gemisch umgehend für 24 Stunden bei -18 °C und dann für 24 h bei 23 °C gelagert. Anschließend wurde das enthaltende grobkörnige Gemisch filtriert und der körnige Rückstand durch ein 4 mm Sieb gesiebt und für 72 h bei 23 °C in einem Umlufttrockenschrank getrocknet. Erhalten wurde ein weißes grobkörniges Pulver mit einem Restfeuchtegehalt von < 2 %. Anschließend wurde dieses in einem Doppelschneckenextruder (Micro Compounder, Fa. DSM Xplore) bei 100 °C, einer Verweilzeit < 5 min, bei 40 U/min durch eine Lochdüse mit einem Durchmesser von 3 mm zu einem Strang mit einem Durchmesser von ca. 3 mm verarbeitet. Der erhaltene Strang wurde in einem FDM-Drucker (X400CE, Fa. German RepRap), umgerüstet auf die Verarbeitung von 3 mm Strängen mit den folgenden Verfahrensbedingungen: Baumraumtemperatur = 23 °C, Extrusionsdüsen-Durchmesser = 0,8 mm, Extruder-Temperatur = 260 °C. Extrusionsgeschwindigkeit = 70 mm/s, verarbeitet. Das Volumen im Heizbereich der Düse beträgt ca. 0,2 mL, wodurch sich eine mittlere Verweilzeit des geschmolzenen Materials während des Applikationsprozesses von ca. 6 Sekunden ergibt.

Tabelle 4: Daten des im Doppelschneckenextruder extrudierten Materials

| Schmelzpunkt Tm (°C) | 45,4 |
|---|---|
| Glasübergangstemperatur Tg (°C) | -44,4 |
| NCO-Gehalt (%) | 0,93 |
| Speichermodul G' 20 °C oberhalb Tm (Pa) | 490000 |
| Speichermodul G' 10 °C unterhalb Tm (Pa) | 705000 |
| Speichermodul G' bei 200 °C (nach 100 sec) (Pa) | 5480 (leichte Vorvernetzung des Materials vermutet) |
| Speichermodul G' bei 200 °C ( nach 1100 sec) (Pa) | 11300 |
| Verarbeitbar auf dem FDM-Drucker | Ja |

Nicht erfindungsgemäßes Beispiel 5:

1000 g der wässrigen Polyurethandispersion Dispercoll® U 54 (50 % in Wasser) wurde für 36 Stunden bei -12 °C und dann für 24 h bei 23 °C gelagert. Anschließend wurde das enthaltende grobkörnige Gemisch filtriert und der körnige Rückstand durch ein 4 mm Sieb gesiebt und für 48 h bei 30 °C in einem Umlufttrockenschrank getrocknet. Erhalten wurde ein weißes grobkörniges Pulver mit einem Restfeuchtegehalt von < 2 %. Anschließend wurde dieses in einem Doppelschneckenextruder (Micro Compounder, Fa. DSM Xplore) bei 100 °C, einer Verweilzeit < 5 min, bei 40 U/min durch eine Lochdüse mit einem Durchmesser von 3 mm zu einem Strang mit einem Durchmesser von ca. 3 mm verarbeitet. Der erhaltene Strang wurde in einem FDM-Drucker (X400CE, Fa. German RepRap), umgerüstet auf die Verarbeitung von 3 mm Strängen mit den folgenden Verfahrensbedingungen: Baumraumtemperatur = 23 °C, Extrusionsdüsen-Durchmesser = 0,8 mm, Extruder-Temperatur = 260 °C. Extrusionsgeschwindigkeit = 70 mm/s, verarbeitet. Das Volumen im Heizbereich der Düse beträgt ca. 0,2 mL, wodurch sich eine mittlere Verweilzeit des geschmolzenen Materials während des Applikationsprozesses von ca. 6 Sekunden ergibt.

Tabelle 5: Daten des im Doppelschneckenextruder extrudierten Materials

| | |
|---|---|
| Schmelzpunkt Tm (°C) | 44,5 |
| Glasübergangstemperatur Tg (°C) | -44,0 |
| NCO-Gehalt (%) | 0 |
| Speichermodul G' 20 °C oberhalb Tm (Pa) | 435000 |
| Speichermodul G' 10 °C unterhalb Tm (Pa) | 736000 |
| Speichermodul G' bei 200 °C (nach 60 sec) (Pa) | 781 |
| Speichermodul G' bei 200 °C (nach 600 sec) (Pa) | 1380 |
| Verarbeitbar auf dem FDM-Drucker | Ja |

Der Speichermodul bei 200 °C nach 600 Sekunden ist weniger als doppelt so hoch als der Speichermodul bei 200 °C nach 60 Sekunden. Dieses nicht erfindungsgemäße Beispiel enthielt keine freien Isocyanatgruppen, die eine Vernetzung bei der Verarbeitungstemperatur verursachen könnten.

**Patentansprüche**

1. Verfahren zum Applizieren eines ein schmelzbares Polymer enthaltenden Materials, umfassend den Schritt:

   - Auftragen eines Filaments des zumindest teilweise geschmolzenen ein schmelzbares Polymer enthaltenden Materials aus einer Austragsöffnung eines Austragselementes heraus auf ein erstes Substrat;
   **dadurch gekennzeichnet, dass**
   das schmelzbare Polymer die folgenden Eigenschaften aufweist:

   - einen Schmelzpunkt (DSC, differential scanning calorimetry; 2. Aufheizung mit Aufheizrate 5 °C/min.) in einem Bereich von $\geq$ 35 °C bis $\leq$ 150 °C;
   - eine Glasübergangstemperatur (DMA, dynamisch-mechanische Analyse gemäß DIN EN ISO 6721-1:2011) in einem Bereich von $\geq$ -70 °C bis $\leq$ 110 °C;

   wobei das Filament während des Applikationsprozesses für $\leq$ 20 Minuten eine Applikationstemperatur von $\geq$ 100 °C oberhalb des Schmelzpunktes des schmelzbaren Polymers aufweist und
   wobei in dem das schmelzbare Polymer aufweisenden Material weiterhin freie NCO-Gruppen vorliegen.

2. Verfahren gemäß Anspruch 1, **dadurch gekennzeichnet, dass** in dem das schmelzbare Polymer aufweisenden Material der Gehalt an freien NCO-Gruppen in einem Bereich von $\geq$0.1 Gewichts-% bis $\leq$ 10 Gewichts-% (titrimetrische Bestimmung nach DIN EN ISO 11909), bezogen auf das Gesamtgewicht des ein schmelzbares Polymer enthaltenden Materials, liegt.

3. Verfahren gemäß Anspruch 1 oder 2, **dadurch gekennzeichnet, dass** die freien NCO-Gruppen in dem das schmelzbare Polymer enthaltenden Material zu $\geq$ 60 mol-% bis $\leq$ 100 mol-% als endständige NCO-Gruppen vorliegen.

4. Verfahren gemäß einem der Ansprüche 1 bis 3, **dadurch gekennzeichnet, dass** das schmelzbare Polymer weiterhin wenigstens eine der folgenden Eigenschaften aufweist:

   A1) einen Speichermodul G' (Platte/Platte-Oszillationsviskosimeter gemäß ISO 6721-10 bei einer Frequenz von 1/s) bei 20 °C oberhalb des Schmelzpunkts von $\geq$ $1{\cdot}10^4$ Pa;
   A2) einen Speichermodul G' (Platte/Platte-Oszillationsviskosimeter gemäß ISO 6721-10 bei einer Frequenz von 1/s) bei 10 °C unterhalb des Schmelzpunkts bei vorangegangener Aufheizung auf eine Temperatur von 20 °C oberhalb des Schmelzpunktes und anschließender Abkühlung mit einer Abkühlrate von 1 °C/min von $\leq$ $1{\cdot}10^7$ Pa
   A3) der Speichermodul G' (Platte/Platte-Oszillationsviskosimeter gemäß ISO 6721-10 bei einer Frequenz von 1/s) des schmelzbaren Polymers bei der höchsten während des Applikations prozesses erreichten Applikationstemperatur ist um den Faktor $\geq$ 10 kleiner als der
   Speichermodul G' (Platte/Platte-Oszillationsviskosimeter gemäß ISO 6721-10 bei einer Frequenz von 1/s) bei einer Temperatur von 20 °C oberhalb des Schmelzpunktes des schmelzbaren Polymers,

A4) mindestens zwei der Eigenschaften A1) bis A3).

5. Verfahren gemäß einem der Ansprüche 1 bis 4, **dadurch gekennzeichnet, dass** die NCO-Gruppen in dem das schmelzbare Polymer aufweisenden Material in einer separaten Komponente mit einem mittleren Molekulargewicht Mn (bestimmt mittels Gelpermeationschromatographie gegen Polystyrol-Standards und N,N-Dimethylacetamid als Elutionsmittel) von ≥ 340 g/mol bis ≤ 10000 g/mol vorliegen.

6. Verfahren gemäß einem der Ansprüche 1 bis 5, **dadurch gekennzeichnet, dass** in dem das schmelzbare Polymer aufweisenden Material weiterhin freie Gruppen mit Zerewitinoff-aktiven H-Atomen vorliegen.

7. Verfahren gemäß einem der Ansprüche 1 bis 6, **dadurch gekennzeichnet, dass** das Filament mit einer Geschwindigkeit von ≥ 20 mm/s auf das erste Substrat aufgetragen wird.

8. Verfahren gemäß einem der Ansprüche 1 bis 7, **dadurch gekennzeichnet, dass** das schmelzbare Polymer derart ausgewählt ist, dass nach einer Lagerung bei der maximal erreichten Applikationstemperatur für eine Zeitdauer von ≤ 1 Stunde der Speichermodul G' (DMA, dynamisch-mechanische Analyse gemäß DIN EN ISO 6721-1:2011 bei einer Frequenz von 1/s) sich mehr als verdoppelt oder der Speichermodul G'(DMA, dynamisch-mechanische Analyse gemäß DIN EN ISO 6721-1:2011 bei einer Frequenz von 1/s) auf einen Wert von weniger als die Hälfte des Ausgangswertes sinkt.

9. Verfahren gemäß einem der Ansprüche 1 bis 8, **dadurch gekennzeichnet, dass** vor dem Auftragen des Materials dieses von einer Temperatur ≤ 40 °C innerhalb von ≤ 5 Minuten auf die maximale Applikationstemperatur erwärmt wird.

10. Verfahren gemäß einem der Ansprüche 1 bis 9, **dadurch gekennzeichnet, dass** das Austragselement mit seiner Austragsöffnung mit einem konstanten Druck im Kontakt mit dem ersten Substrat über das erste Substrat gefahren wird.

11. Verfahren gemäß einem der Ansprüche 1 bis 10, **dadurch gekennzeichnet, dass** das Material mit einem Druck von ≥ 0.001 bar auf das erste Substrat aufgetragen wird.

12. Verfahren gemäß einem der Ansprüche 1 bis 11, **dadurch gekennzeichnet, dass** das schmelzbare Polymer ein Polyurethan enthält, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

13. Verfahren gemäß einem der Ansprüche 1 bis 12, **dadurch gekennzeichnet, dass** das schmelzbare Polymer nach Erwärmen auf 20 °C oberhalb seines Schmelzpunktes und Abkühlen auf 20 °C bei einer Abkühlrate von 4 °C/min in einem Temperaturintervall von 25 °C bis 40 °C für ≥ 1 Minute ein Speichermodul G' (bestimmt bei der jeweils herrschenden Temperatur mit einem Platte/Platte-Oszillationsviskosimeter gemäß ISO 6721-10 bei einer Frequenz von 1/s) von ≥ 100 kPa bis ≤ 10 MPa aufweist und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Frequenz von 1/s) von ≥ 20 MPa aufweist.

14. Verfahren gemäß einem der Ansprüche 1 bis 13, **dadurch gekennzeichnet, dass** das aufgetragene Material mit einem zweiten Substrat kontaktiert wird.

15. Verfahren gemäß einem der Ansprüche 1 bis 14, **dadurch gekennzeichnet, dass** das Verfahren ein Verfahren zur Herstellung eines Gegenstandes aus dem ein schmelzbares Polymer enthaltenden Material ist und das Verfahren die Schritte umfasst:

I) Auftragen eines Filaments des zumindest teilweise geschmolzenen Materials auf einen Träger, so dass eine Lage des Materials erhalten wird, welche einem ersten ausgewählten Querschnitt des Gegenstands entspricht;
II) Auftragen eines Filaments des zumindest teilweise geschmolzenen Materials auf eine zuvor aufgetragene Lage des Materials, so dass eine weitere Lage des Materials erhalten wird, welche einem weiteren ausgewählten Querschnitt des Gegenstands entspricht und welche mit der zuvor aufgetragenen Lage verbunden ist;
III) Wiederholen des Schritts II), bis der Gegenstand gebildet ist.

**Claims**

1. Method of applying a material comprising a fusible polymer, comprising the step of:

    - applying a filament of the at least partly molten material comprising a fusible polymer from a discharge opening of a discharge element to a first substrate;
    **characterized in that**
    the fusible polymer has the following properties:

        - a melting point (DSC, differential scanning calorimetry; 2nd heating at heating rate 5°C/min) within a range from $\geq$ 35°C to $\leq$ 150°C;
        - a glass transition temperature (DMA, dynamic-mechanical analysis to DIN EN ISO 6721-1:2011) within a range from $\geq$ -70°C to $\leq$ 110°C;

    wherein the filament, during the application process, has an application temperature of $\geq$ 100°C above the melting point of the fusible polymer for $\leq$ 20 minutes and
    wherein there are still free NCO groups in the material including the fusible polymer.

2. Method according to Claim 1, **characterized in that** the content of free NCO groups in the material including the fusible polymer is within a range from $\geq$ 0.1% by weight to $\leq$ 10% by weight (titrimetric determination to DIN EN ISO 11909), based on the total weight of the material containing a fusible polymer.

3. Method according to Claim 1 or 2, **characterized in that** $\geq$ 60 mol% to $\leq$ 100 mol% of the free NCO groups in the material comprising the fusible polymer are in the form of terminal NCO groups.

4. Method according to any of Claims 1 to 3, **characterized in that** the fusible polymer also has at least one of the following properties:

    A1) a storage modulus G' (plate/plate oscillation viscometer to ISO 6721-10 at a frequency of 1/s) at 20°C above the melting point of $\geq$ 1·10$^4$ Pa;
    A2) a storage modulus G' (plate/plate oscillation viscometer to ISO 6721-10 at a frequency of 1/s) at 10°C below the melting point with prior heating to a temperature of 20°C above the melting point and subsequent cooling at a cooling rate of 1°C/min of $\leq$ 1·10$^7$ Pa;
    A3) the storage modulus G' (plate/plate oscillation viscometer to ISO 6721-10 at a frequency of 1/s) of the fusible polymer at the highest application temperature attained during the application process is a factor of $\geq$ 10 less than the storage modulus G' (plate/plate oscillation viscometer to ISO 6721-10 at a frequency of 1/s) at a temperature of 20°C above the melting point of the fusible polymer,
    A4) at least two of properties A1) to A3).

5. Method according to any of Claims 1 to 4, **characterized in that** the NCO groups in the material including the fusible polymer are present in a separate component having an average molecular weight Mn (determined by means of gel permeation chromatography against polystyrene standards and N,N-dimethylacetamide as eluent) of $\geq$ 340 g/mol to $\leq$ 10 000 g/mol.

6. Method according to any of Claims 1 to 5, **characterized in that** there are also free groups having Zerewitinoff-active hydrogen atoms in the material including the fusible polymer.

7. Method according to any of Claims 1 to 6, **characterized in that** the filament is applied to the first substrate at a rate of $\geq$ 20 mm/s.

8. Method according to any of Claims 1 to 7, **characterized in that** the fusible polymer is selected such that, after storage at the maximum application temperature attained for a duration of $\leq$ 1 hour, the storage modulus G' (DMA, dynamic-mechanical analysis to DIN EN ISO 6721-1:2011 at a frequency of 1/s) more than doubles or the storage modulus G' (DMA, dynamic-mechanical analysis to DIN EN ISO 6721-1:2011 at a frequency of 1/s) falls to a value of less than half the starting value.

9. Method according to any of Claims 1 to 8, **characterized in that**, prior to the application of the material, it is heated from a temperature of $\leq$ 40°C to the maximum application temperature within $\leq$ 5 minutes.

**10.** Method according to any of Claims 1 to 9, **characterized in that** the discharge element with its discharge opening is run over the first substrate in contact with the first substrate at a constant pressure.

**11.** Method according to any of Claims 1 to 10, **characterized in that** the material is applied to the first substrate at a pressure of ≥ 0.001 bar.

**12.** Method according to any of Claims 1 to 11, **characterized in that** the fusible polymer comprises a polyurethane obtainable from the reaction of a polyisocyanate component and a polyol component, where the polyol component includes a polyester polyol having a no-flow point (ASTM D5985) of ≥ 25°C.

**13.** Method according to any of Claims 1 to 12, **characterized in that** the fusible polymer, after heating to 20°C above its melting point and cooling to 20°C at a cooling rate of 4°C/min, within a temperature interval from 25°C to 40°C for ≥ 1 minute, has a storage modulus G' (determined at the respective temperature with a plate/plate oscillation viscometer to ISO 6721-10 at a frequency of 1/s) of ≥ 100 kPa to ≤ 10 MPa and, after cooling to 20°C and storage at 20°C for 120 minutes, has a storage modulus G' (determined at 20°C with a plate/plate oscillation viscometer to ISO 6721-10 at a frequency of 1/s) of ≥ 20 MPa.

**14.** Method according to any of Claims 1 to 13, **characterized in that** the material applied is contacted with a second substrate.

**15.** Method according to any of Claims 1 to 14, **characterized in that** the method comprises a method of producing an article from the material comprising a fusible polymer and the method comprises the steps of:

I) applying a filament of the at least partly molten material to a carrier so as to obtain a layer of the material, corresponding to a first selected cross section of the article;
II) applying a filament of the at least partly molten material to a previously applied layer of the material so as to obtain a further layer of the material, corresponding to a further selected cross section of the article and bonded to the layer applied beforehand;
III) repeating step II) until the article has been formed.

**Revendications**

**1.** Procédé pour l'application d'un matériau contenant un polymère fusible, comprenant l'étape de :

- application d'un filament dudit matériau contenant un polymère fusible, au moins partiellement fondu, à partir d'une ouverture de sortie d'un élément de sortie sur un premier substrat ;
**caractérisé en ce que** le polymère fusible présente les propriétés suivantes :

- un point de fusion (DSC, calorimétrie différentielle à balayage ; 2ème chauffage à une vitesse de chauffage de 5°C/min.) dans une plage de ≥ 35°C à ≤ 150°C ;
- une température de transition vitreuse (DMA, analyse mécanique dynamique selon la norme DIN EN ISO 6721-1:2011) dans une plage de ≥ -70°C à ≤ 110°C ;

le filament présentant, pendant le procédé d'application, pendant ≤ 20 minutes, une température d'application de ≥ 100°C au-dessus du point de fusion du polymère fusible et des groupes NCO libres pouvant en outre être présents dans le matériau présentant le polymère fusible.

**2.** Procédé selon la revendication 1, **caractérisé en ce que**, dans le matériau présentant le polymère fusible, la teneur en groupes NCO libres est située dans une plage de ≥ 0,1% en poids à ≤ 10% en poids (détermination par titrimétrie selon la norme DIN EN ISO 11909), par rapport au poids total du matériau contenant un polymère fusible.

**3.** Procédé selon la revendication 1 ou 2, **caractérisé en ce que** les groupes NCO libres se trouvent dans le matériau contenant le polymère fusible, à raison de ≥ 60% en mole à ≤ 100% en mole, sous forme de groupes NCO en position terminale.

**4.** Procédé selon l'une quelconque des revendications 1 à 3, **caractérisé en ce que** le polymère fusible présente en outre au moins l'une des propriétés suivantes :

A1) un module d'accumulation G' (viscosimètre à oscillations plaque/plaque selon la norme ISO 6721-10 à une fréquence de 1/s), à 20°C au-dessus du point de fusion, ≥ 1 * 10⁴ Pa ;

A2) un module d'accumulation G' (viscosimètre à oscillations plaque/plaque selon la norme ISO 6721-10 à une fréquence de 1/s), à 10°C sous le point de fusion, après un chauffage préalable à une température de 20°C au-dessus du point de fusion et un refroidissement consécutif à une vitesse de refroidissement de 1°C/min, ≤ 1 * 10⁷ Pa ;

A3) le module d'accumulation G' (viscosimètre à oscillations plaque/plaque selon la norme ISO 6721-10 à une fréquence de 1/s) du polymère fusible à la température d'application la plus élevée atteinte pendant le procédé d'application est inférieur d'un facteur ≥ 10 au module d'accumulation G' (viscosimètre à oscillations plaque/plaque selon la norme ISO 6721-10 à une fréquence de 1/s) à une température de 20°C au-dessus du point de fusion du polymère fusible ;

A4) au moins deux des propriétés A1) à A3).

**5.** Procédé selon l'une quelconque des revendications 1 à 4, **caractérisé en ce que** les groupes NCO dans le matériau présentant le polymère fusible sont présents dans un composant séparé présentant un poids moléculaire moyen Mn (déterminé par chromatographie par perméation de gel par rapport au standard polystyrène et avec du N,N-diméthylacétamide comme éluant) de ≥ 340 g/mole à ≤ 10.000 g/mole.

**6.** Procédé selon l'une quelconque des revendications 1 à 5, **caractérisé en ce que** des groupes libres présentant des atomes H actifs selon Zerewitinoff sont en outre présents dans le matériau présentant le polymère fusible.

**7.** Procédé selon l'une quelconque des revendications 1 à 6, **caractérisé en ce que** le filament est appliqué sur le premier substrat à une vitesse ≥ 20 mm/s.

**8.** Procédé selon l'une quelconque des revendications 1 à 7, **caractérisé en ce que** le polymère fusible est choisi de manière telle qu'après un entreposage à la température d'application atteinte au maximum pour une durée ≤ 1 heure, le module d'accumulation G' (DMA, analyse mécanique dynamique selon la norme DIN EN ISO 6721-1:2011 à une fréquence de 1/s) a plus que doublé ou le module d'accumulation G' (DMA, analyse mécanique dynamique selon la norme DIN EN ISO 6721-1:2011 à une fréquence de 1/s) diminue à une valeur inférieure à la moitié de la valeur de départ.

**9.** Procédé selon l'une quelconque des revendications 1 à 8, **caractérisé en ce qu'**avant l'application du matériau, celui-ci est chauffé, à partir d'une température ≤ 40°C pendant ≤ 5 minutes, à la température d'application maximale.

**10.** Procédé selon l'une quelconque des revendications 1 à 9, **caractérisé en ce que** l'élément de sortie est guidé sur le premier substrat avec son ouverture de sortie à une pression constante en contact avec le premier substrat.

**11.** Procédé selon l'une quelconque des revendications 1 à 10, **caractérisé en ce que** le matériau est appliqué sur le premier substrat à une pression ≥ 0,001 bar.

**12.** Procédé selon l'une quelconque des revendications 1 à 11, **caractérisé en ce que** le polymère fusible contient un polyuréthane qui peut être obtenu par la réaction d'un composant polyisocyanate et d'un composant polyol, le composant polyol comprenant un polyester-polyol qui présente un point de figeage (ASTM D5985) ≥ 25°C.

**13.** Procédé selon l'une quelconque des revendications 1 à 12, **caractérisé en ce que** le polymère fusible présente, après chauffage à 20°C au-dessus de son point de fusion et refroidissement à 20°C à une vitesse de refroidissement de 4°C/min dans un intervalle de température de 25°C à 40°C pendant ≥ 1 minute, un module d'accumulation G' (déterminé à la température respective qui règne à l'aide d'un viscosimètre à oscillations plaque/plaque selon la norme ISO 6721-10 à une fréquence de 1/s) de ≥ 100 kPa à ≤ 10 MPa et, après refroidissement à 20°C et entreposage pendant 120 minutes à 20°C, un module d'accumulation G' (déterminé à 20°C à l'aide d'un viscosimètre à oscillations plaque/plaque selon la norme ISO 6721-10 à une fréquence de 1/s) de ≥ 20 MPa.

**14.** Procédé selon l'une quelconque des revendications 1 à 13, **caractérisé en ce que** le matériau appliqué est mis en contact avec un deuxième substrat.

**15.** Procédé selon l'une quelconque des revendications 1 à 14, **caractérisé en ce que** le procédé est un procédé pour la fabrication d'un objet à partir du matériau contenant un polymère fusible et le procédé comprend les étapes :

I) application d'un filament dudit matériau au moins partiellement fondu sur un support, de manière à obtenir une couche du matériau qui correspond à une première section transversale sélectionnée de l'objet ;
II) application d'un filament dudit matériau au moins partiellement fondu sur une couche de matériau appliquée au préalable, de manière à obtenir une autre couche du matériau qui correspond à une autre section transversale sélectionnée de l'objet et qui est reliée à la couche appliquée au préalable ;
III) répétition de l'étape II) jusqu'à ce que l'objet soit formé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5121329 A
- WO 2015197515 A1
- WO 2016198425 A1
- DE 102012020000 A1
- EP 1036103 B1
- EP 1231232 B1
- EP 1232232 B1
- WO 2018046726 A1
- EP 0192946 A1